# EUROPEAN PATENT APPLICATION

(11) **EP 4 675 480 A1**
(43) Date of publication of application: **07.01.2026**
(21) Application number: 23925420.4
(22) Date of filing: 14.12.2023
(51) Int. Cl.: G06F 21/62, G06F 16/9035

(54) **INFORMATION PROCESSING DEVICE, INFORMATION OUTPUT METHOD, AND INFORMATION OUTPUT PROGRAM**

(30) Priority: 28.02.2023 JP 2023030172
(71) Applicant: Yokogawa Electric Corporation, Tokyo 180-8750 (JP)
(72) Inventor: ONO, Masatoshi, Musashino-shi, Tokyo 180-8750 (JP)
(74) Representative: Winter, Brandl - Partnerschaft mbB
(86) International application number: PCT/JP2023/044871
(87) International publication number: WO 2024/180869

(57) **Abstract**

An information processing apparatus 10 includes a first acquisition unit 16 that acquires, for each resource in a predetermined system, setting data in which an access right to the resource has been set, a second acquisition unit 18 that acquires history data of an access performed on the resource, and an output unit 19 that outputs information on the resource corresponding to a difference between the setting data and the history data.

## Description

### Field

The present invention relates to an information processing apparatus, an information output method, and an information output program.

### Background

As one of security functions provided by an operating system (OS) or the like, there is an access control function to restrict use of a resource in accordance with a privilege, what is called an access right, to use various kinds of resources that are shared via a system.

### Citation List

### Patent Literature

Patent Literature 1: Japanese Laid-open Patent Publication No. 2016-143211

### Summary

### Technical Problem

However, at the time of setting of the above described access right, access to the maximum resources that is able to perform the overall function related to the roll of a user is allowed, so that there is an aspect that the access right is excessively given to the resource that is used to execute the function that is not actually used by the user.

An object of the present invention is to support minimization of an access right of a user.

### Solution to Problem

According to an aspect of an embodiment, an information processing apparatus includes a first acquisition unit that acquires, for each resource in a predetermined system, setting data in which an access right to the resource has been set, a second acquisition unit that acquires history data of an access performed on the resource, and an output unit that outputs information on the resource corresponding to a difference between the setting data and the history data.

According to an aspect of an embodiment, an information output method causes a computer to execute a process including acquiring, for each resource in a predetermined system, setting data in which an access right to the resource has been set, acquiring history data of an access performed on the resource, and outputting information on the resource corresponding to a difference between the setting data and the history data.

According to an aspect of an embodiment, an information output program causes a computer to execute a process including acquiring, for each resource in a predetermined system, setting data in which an access right to the resource has been set, acquiring history data of an access performed on the resource, and outputting information on the resource corresponding to a difference between the setting data and the history data.

### Advantageous Effects of Invention

According to an aspect of an embodiment, it is possible to support minimization of the access right of the user.

### Brief Description of Drawings

FIG. 1 is a block diagram illustrating an example of a functional configuration of an information processing apparatus.
FIG. 2 is a flowchart illustrating the flow of an information output process.
FIG. 3 is a diagram illustrating one example of access right setting data.
FIG. 4 is a schematic diagram illustrating one example of an engineering result.
FIG. 5 is a schematic diagram illustrating an acquisition example of acquiring setting of an access right.
FIG. 6 is a schematic diagram illustrating one example of an access operation performed by an operator.
FIG. 7 is a schematic diagram illustrating an acquisition example of acquiring an access history.
FIG. 8 is a schematic diagram illustrating a checking example of checking the access right setting and the access history.
FIG. 9 is a diagram illustrating one example of a deletion recommendation screen.
FIG. 10 is a diagram illustrating one example of the deletion recommendation screen.
FIG. 11 is a diagram illustrating one example of the access right setting data.
FIG. 12 is a diagram illustrating an example of a hardware configuration.

### Description of Embodiments

In the following, preferred embodiments of an information processing apparatus, an information output method, and an information output program according to the present application will be explained in detail below with reference to the accompanying drawings. In each of the embodiments, one example or one aspect is merely indicated, and a numerical value, a range of a function, a usage scene, and the like are not limited by the examples described in the embodiments. In addition, each of the embodiments can be used in any appropriate combination as long as processing details do not conflict with each other.

### [First Embodiment]

### <Configuration of information processing apparatus 10>

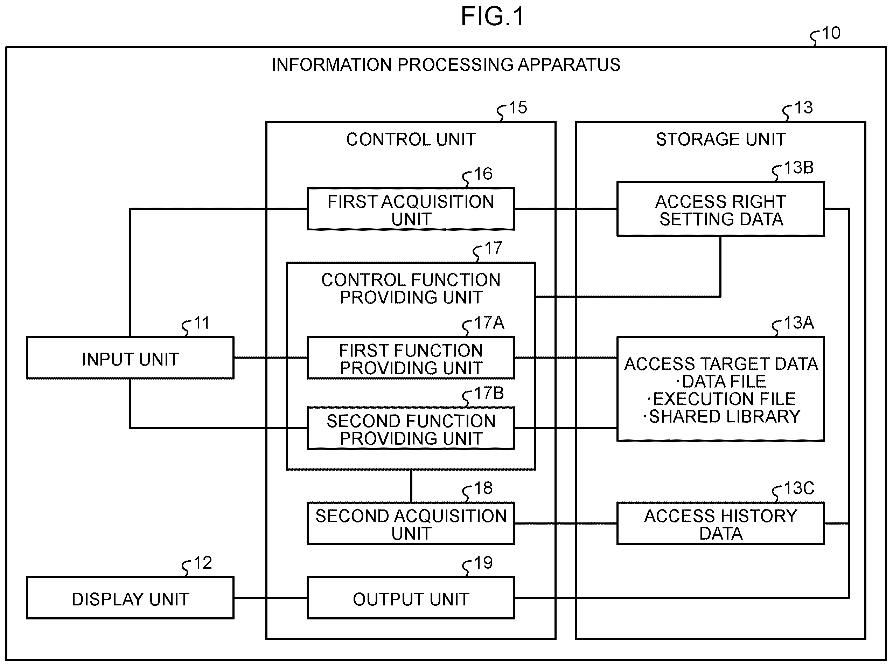

FIG. 1 is a block diagram illustrating an example of a functional configuration of an information processing apparatus 10. The information processing apparatus 10 illustrated in FIG. 1 is an apparatus that provides an information output function that outputs information, such as a recommendation, for minimizing an access right of a user.

FIG. 1 schematically illustrates blocks related to an information output function held by the information processing apparatus 10. As illustrated in FIG. 1, the information processing apparatus 10 includes an input unit 11, a display unit 12, a storage unit 13, and a control unit 15.

The input unit 11 is a functioning unit that inputs various kinds of operations. As one example, in a case where the information processing apparatus 10 is implemented by a desktop personal computer or a notebook personal computer, the input unit 11 may be implemented by general-purpose peripheral devices, such as a keyboard and a mouse.

The display unit 12 is a functioning unit that displays various kinds of information. As one example, the display unit 12 may be implemented by a liquid crystal display, an organic electro luminescence (EL) display, or the like.

The input unit 11 and the display unit 12 may be integrated as a display input unit that is implemented by a touch panel, or the like.

The storage unit 13 is a functioning unit that stores therein various kinds of data. As one example, the storage unit 13 is implemented by an internal storage included in the information processing apparatus 10, an external storage provided outside of the information processing apparatus 10, or an auxiliary storage for the information processing apparatus 10. For example, the storage unit 13 stores therein access target data 13A, access right setting data 13B, and access history data 13C. Among these pieces of data, the access right setting data 13B corresponds to one example of setting data, and the access history data 13C corresponds to one example of history data. Furthermore, descriptions of the access target data 13A, the access right setting data 13B, and the access history data 13C will be described later together with a situation in which reference, generation, or registration is executed.

The control unit 15 is a functioning unit that performs the overall control of the information processing apparatus 10. For example, the control unit 15 may be implemented by a hardware processor. As illustrated in FIG. 1, the control unit 15 includes a first acquisition unit 16, a control function providing unit 17, a second acquisition unit 18, and an output unit 19.

As one example, each of the first acquisition unit 16, the second acquisition unit 18, and the output unit 19 may be implemented as a process by executing an information output program that implements the above described information output function. In contrast, the control function providing unit 17 may be implemented as a process by executing control software that implements a function of a process control system that will be described later. Furthermore, the control unit 15 may also be implemented by hard-wired logic or the like.

The first acquisition unit 16 is a processing unit that acquires setting of an access right related to the resource held by the information processing apparatus 10. The "resource" mentioned here is a resource that is shared via an arbitrary system. An example of the system mentioned here includes a process control system that controls a process performed in a plant. Specifically, the resource is a file that implements a function of the process control system. In the "file" mentioned here, as one example, a data file, an execution file, a library, or the like may be included. The file is not limited to this kind of file, but a folder that is used to access the file or a network may be included in a category of the resource, and furthermore, a peripheral device that is an output destination of the file, or the like may also be included in the category of the resource. As one example, the first acquisition unit 16 is able to receive a setting input of an access right to the access target data 13A that is stored in the storage unit 13 from the user who has an administrator privilege via the input unit 11.

Here, the access target data 13A indicates the overall data to be accessed by the user. In the access target data 13A like this, various kinds of resources that implement a function of the process control system provided by the control software may be included. Furthermore, the process control system corresponds to one example of a predetermined system.

In the following, as one example of a usage scene, an example in which an access right is set in the resource that implements the function of the process control system provided by the control software installed in the information processing apparatus 10 that is a multiuser-adaptive information processing apparatus and that is used by a plurality of users will be described.

As one example, modules corresponding to various kinds of functions, such as an engineering function and an operation monitoring function, may be packaged in the control software. The "engineering function" mentioned here indicates a function of performing engineering, such as setting of a network or setting of an alarm, with respect to each of the field devices installed in a plant. Moreover, the "operation monitoring function" mentioned here indicates a function of monitoring a manipulation operation performed on the plant via a Human Machine Interface (HMI). Furthermore, here, the engineering function and the operation monitoring function are cited as an example, but a ledger sheet function of outputting data in which accumulation and processing have been performed on a process value in an arbitrary form, for example, in the form of a daily report, a monthly report, a lot report, a simple batch report, or the like may also be packaged in the control software.

For example, when the process control system constituted as described above is used, the following access right is able to be received via the input unit 11 while a user (hereinafter, referred to as an "administrator") who has an administrator privilege is logging in.

In this case, as one example, the administrator is able to allow access to the maximum number of resources that can perform the overall function related to the role of each of the users, such as an engineer who uses the engineering function and an operator who uses the operation monitoring function.

For example, setting of an access right to allow access to the resources, such as the data file and the execution file, to be used for the purpose of performing the engineering by the engineer is performed. Moreover, setting of an access right to allow access to the resources, such as the data file and the execution file, to be used for the purpose of performing operation monitoring by an operator is performed. In addition, setting of an access right to allow access to a shared library that is shared between the modules, such as the engineer function and the operation monitoring function, to be performed by the engineer and the operator is performed.

After this kind of setting of the access right has been performed by the administrator, the first acquisition unit 16 stores the setting of the access right performed by the administrator as the access right setting data 13B in the storage unit 13. Furthermore, here, a case in which the first acquisition unit 16 receives the setting of the access right has been described as an example, but it may be possible to configure such that the setting of the access right may be received by the control function providing unit 17 that will be described later.

The control function providing unit 17 is a processing unit that provides the function of the various kinds of modules that are packaged in the control software. As illustrated in FIG. 1, the control function providing unit 17 includes a first function providing unit 17A and a second function providing unit 17B.

For example, the first function providing unit 17A provides the above described engineering function by executing the module that implements the above described engineering function and loading a process. Moreover, the second function providing unit 17B provides the above described operation monitoring function by executing the module that implements the above described operation monitoring function and loading a process.

At the time of execution of these engineering function and the operation monitoring function, control of access to the resources included in the access target data 13A is performed in accordance with the access right of the user who is currently logging in from among the access rights included in the access right setting data 13B.

As one aspect, when an engineer logs in, engineering of the control software is able to be performed through the engineering function. As another aspect, when the operator logs in, monitoring of the operation of the plant is able to be performed through the operation monitoring function.

The second acquisition unit 18 is a processing unit that acquires an access history. As one example, in a case where access to the resource included in the access target data 13A has been performed, the second acquisition unit 18 generates identification information on the resource, account information on the user, and an access log that is associated with the type of the access. In the access log generated like this, another item, such as time at which the access is performed, may be included. For example, in a case of access to the data file, an access type, such as read or write, is generated. Moreover, in a case of access to the execution file, an access type, such as read or write, is generated. When the access log has been generated in this way, the second acquisition unit 18 additionally registers a data entry of the subject access log in the access history data 13C that is stored in the storage unit 13. Furthermore, here, a case in which the log has been generated by the second acquisition unit 18 has been described as an example, but the log need not always be generated by the second acquisition unit 18, and the access log may also be acquired from the software that generates the access log, or the like.

The output unit 19 is an output unit that outputs various kinds of information. An example of the information that is output by the output unit 19 in this way includes information that is related to the resource and that proposes to delete the access right to the resource from among the resources in each of which the access right has been set, from the aspect of minimizing the access right of the user. As one example, in a case where monitoring of the manipulation operation of the plant performed on the basis of the operation monitoring function has been stopped or in a case where a user request for the above described recommendation has been received via the input unit 11 when the administrator logs in, the output unit 19 is able to start the following process with any other arbitrary trigger. In other words, the output unit 19 checks the access right setting data 13B against the access history data 13C, and outputs a difference between the access right setting data 13B and the access history data 13C. For example, the output unit 19 causes the display unit 12 to display a recommendation that proposes to delete an access right whose access history is not detected in the access history data 13C from among the access rights that have been set in the access right setting data 13B. Furthermore, here, as one example of an output mode output by the output unit 19, an example of the display output has been described, but a print output, an audio output, or the like may be performed by the output unit 19.

### <Flow of processes>

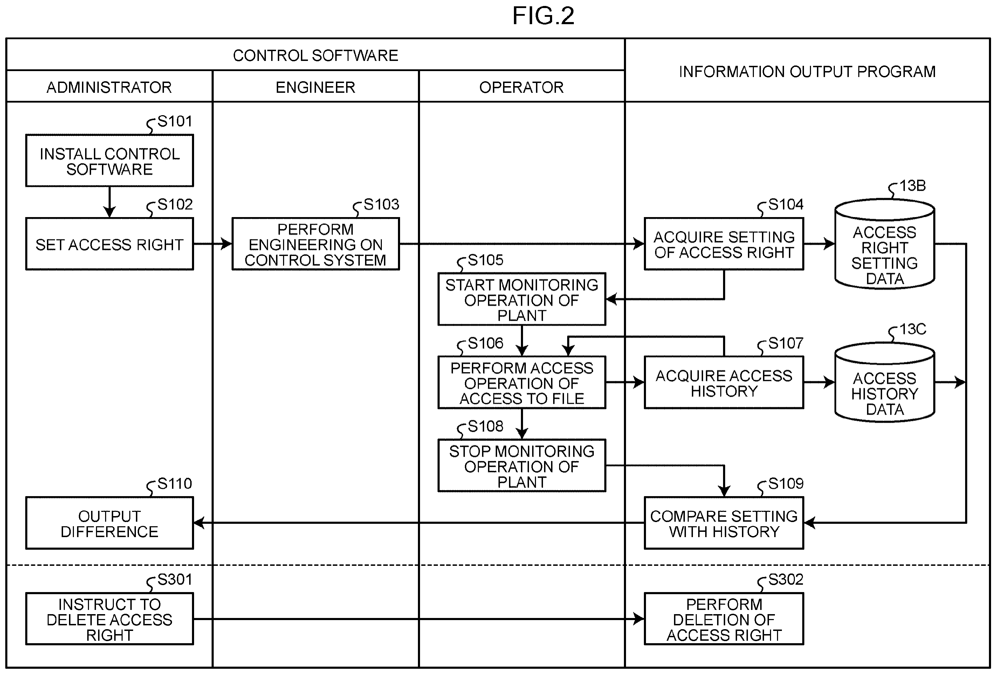

FIG. 2 is a flowchart illustrating the flow of an information output process. As illustrated in FIG. 2, in a case where an instruction input indicating an instruction to install the control software is received from the user who has an administrator privilege, that is, an administrator, via the input unit 11, the control software is installed (Step S101). Subsequently, the control function providing unit 17 receives, via the input unit 11, setting of the access right to be given to the access target data 13A in a state in which the administrator is logging in (Step S102).

Then, the first function providing unit 17A performs engineering on the control software by receiving the instruction input via the input unit 11 in a state in which the engineer is logging in (Step S103).

After that, the first acquisition unit 16 acquires the setting of the access right that has been acquired at Step S102 (Step S104). And then, the first acquisition unit 16 stores the setting of the access right acquired at Step S104 in the storage unit 13 as the access right setting data 13B (Step S105).

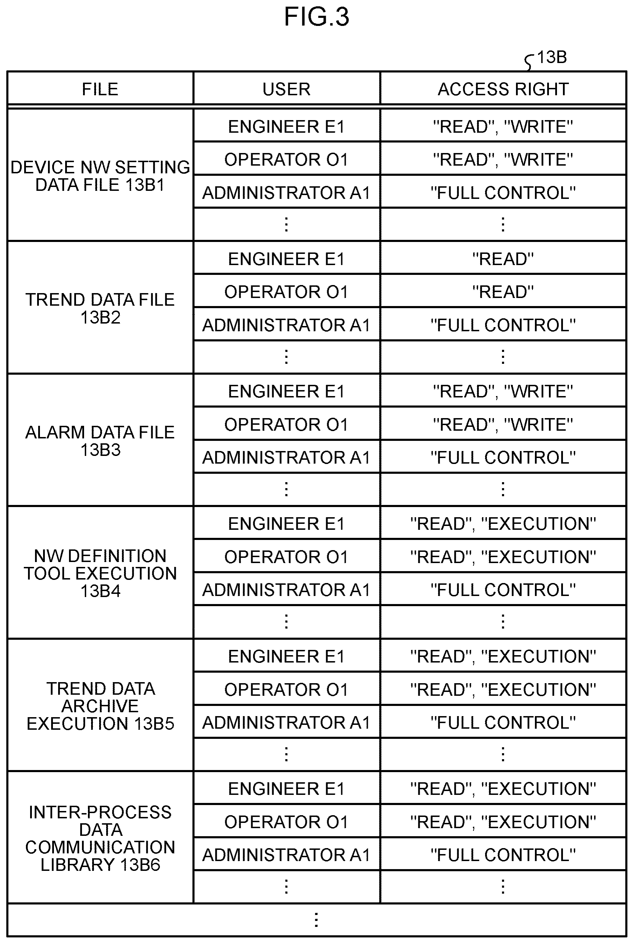

FIG. 3 is a diagram illustrating one example of the access right setting data 13B. FIG. 3 illustrates a file as an example of the resource in which the access right is set, but the access right may also be set in another resource, such as a folder. In addition, in FIG. 3, as an example of the user to whom the access right is given, an administrator, an engineer, and an operator are listed as an example, but, in addition to these examples, for example, the access right may be also given to another user, such as a user group, and the roll of the user is not limited to the engineer or the operator.

As illustrated in FIG. 3, as indicated in the access right setting data 13B, a different access right for each user is set to each of the files. For example, in FIG. 3, from among the resources that are included in the access target data 13A, the access rights that are set in a device network (NW) setting data file 13B1, a trend data file 13B2, an alarm data file 13B3, NW definition tool execution 13B4, trend data archive execution 13B5, and an inter-process data communication library 13B6 are selectively exemplified.

From among the above described resources, the device NW setting data file 13B1 is a data file in which network setting of a field device, such as a measurement device, an operation device, or a controller, that is installed in the plant has been defined. As one aspect, the device NW setting data file 13B1 is subjected to engineering by way of a NW definition tool that is provided by the above described engineering function. In the item of the access right for an engineer E1 indicated in the device NW setting data file 13B1, "read" and "write" are set. In addition, in the item of the access right for an operator O1, "read" and "write" are set. In addition, in the item of the access right for an administrator A1, "full control" is set.

The trend data file 13B2 is a data file related to a trend of a process value, that is, a time series variation, transmitted from the field device. As one aspect, the trend data file 13B2 is monitored via an HMI, such as an operation monitoring screen, provided by the above described operation monitoring function. In the item of the access right for the engineer E1 indicated in the trend data file 13B2 like this, "read" is set. In addition, in the item of the access right for the operator O1, "read" is set. In addition, in the item of the access right for the administrator A1, "full control" is set.

The alarm data file 13B3 is a data file in which setting of an alarm that is output on the basis of a process value that is output by the field device has been defined. As one aspect, the alarm data file 13B3 has an aspect that engineering related to setting of a threshold or the like that is compared with a process value is performed by the above described engineering function. In the item of the access right for the engineer E1 indicated in the alarm data file 13B3 like this, "read" and "write" are set. In addition, in the item of the access right for the operator O1, "read" and "write" are set. In addition, in the item of the access right for the administrator A1, "full control" is set.

The NW definition tool execution 13B4 is a program file, what is called an execution file, that executes a tool for supporting the definition of the network setting of the field device. In the item of the access right for the engineer E1 indicated in the NW definition tool execution 13B4, "read" and "execution" are set. In addition, in the item of the access right for the operator O1, "read" and "execution" are set. In addition, in the item of the access right for the administrator A1, "full control" is set.

The trend data archive execution 13B5 is an execution file that generates an archive of the trend data. In the item of the access right for the engineer E1 indicated in the trend data archive execution 13B5 like this, "read" and "execution" are set. In addition, in the item of the access right for the operator O1, "read" and "execution" are set. In addition, in the item of the access right for the administrator A1, "full control" is set.

The inter-process data communication library 13B6 is a library that has data communication function between a process of the engineering function a process of the operation monitoring function. In the item of the access right for the engineer E1 indicated in the inter-process data communication library 13B6 like this, "read" and "execution" are set. In addition, in the item of the access right for the operator O1, "read" and "execution" are set. In addition, in the item of the access right for the administrator A1, "full control" is set.

A description will be given here by referring back to FIG. 2. The processes at Step S106 and Step S107 described below are performed in a period of time between a start of the process of monitoring the manipulation operation related to the plant at Step S105 and a stop of the process of monitoring manipulation operation related to the plant at Step S108.

In other words, as a result of the second function providing unit 17B receiving an instruction input via the input unit 11 in a state in which the operator is logging in, the second function providing unit 17B performs an access operation, via the above described operation monitoring function, of the access to the resource in which the access right has been given (Step S106).

Every time the access operation is performed in this way, the second acquisition unit 18 acquires the access history including the identification information on the resource, the account information on the user, and the type of the access, and then registers the data entry of the subject access history in the access history data 13C (Step S107).

After that, in a case where monitoring of the manipulation operation of the plant has been stopped at Step S108, the output unit 19 checks the access right setting data 13B against the access history data 13C (Step S109).

Then, the output unit 19 causes the display unit 12 to display a difference between the access right setting data 13B and the access history data 13C (Step S110). At this time, as one example, the output unit 19 is able to cause the display unit 12 to display a recommendation that proposes to delete the access right whose access history is not detected in the access history data 13C from among the access rights that have been set in the access right setting data 13B.

After the difference has been displayed at Step S110 in this way, the output unit 19 is able to receive an execution instruction to delete the access right from the administrator (Step S301). And then, the output unit 19 deletes the access right that has been instructed to be deleted by the execution instruction at Step S301 and that is included in the access right setting data 13B (Step S302). Furthermore, here, a case has been described as an example in which a deletion of the access right is performed in a case where a user operation is performed, that is, in a case where the execution instruction to delete the access right at Step S301 has been received, but the example is not limited to this. For example, the access right to the resource corresponding to the subject difference may also automatically be deleted after having extracted the above described difference without performing the user operation. In this case, instead of the output unit 19, a deletion unit that performs a deletion of the access right may be included in the information processing apparatus 10.

### <Specific example>

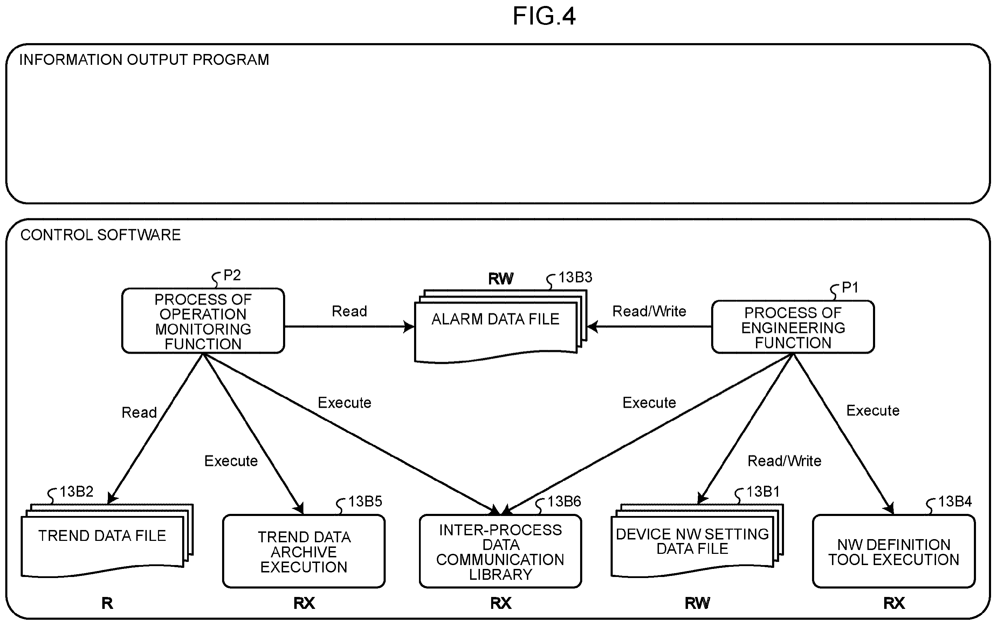

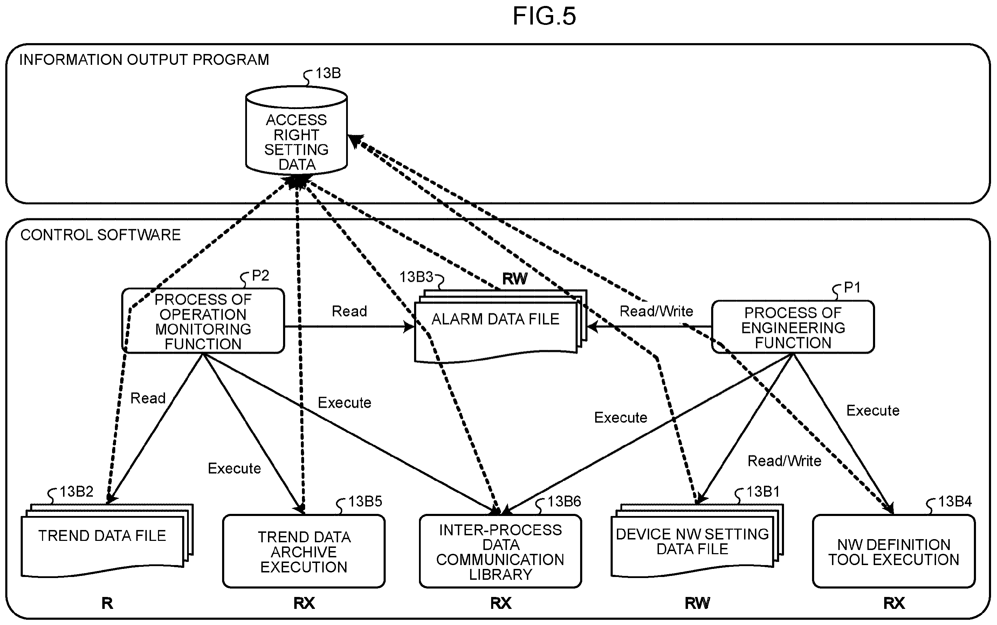

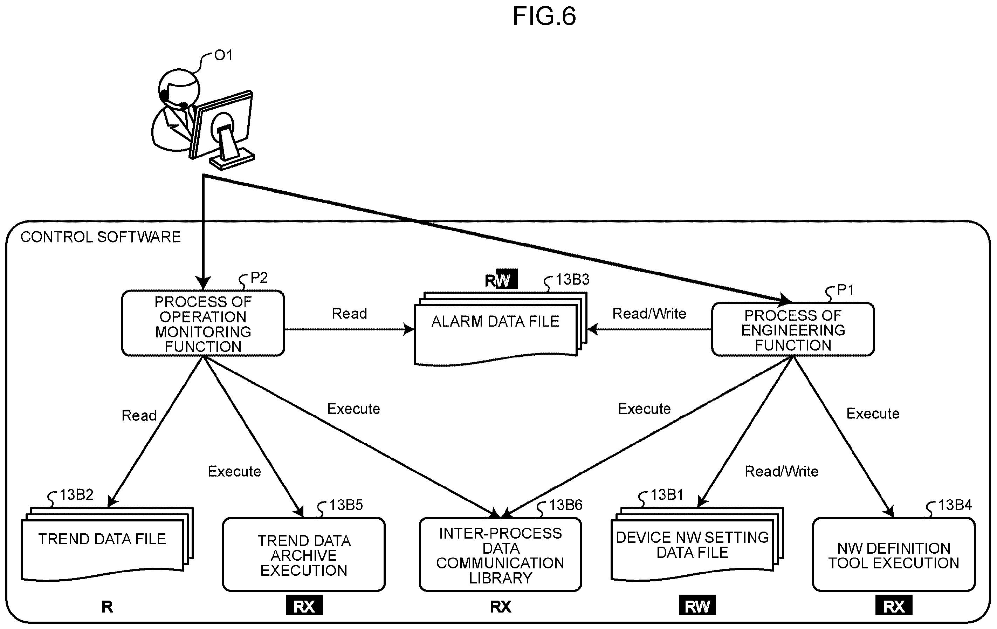

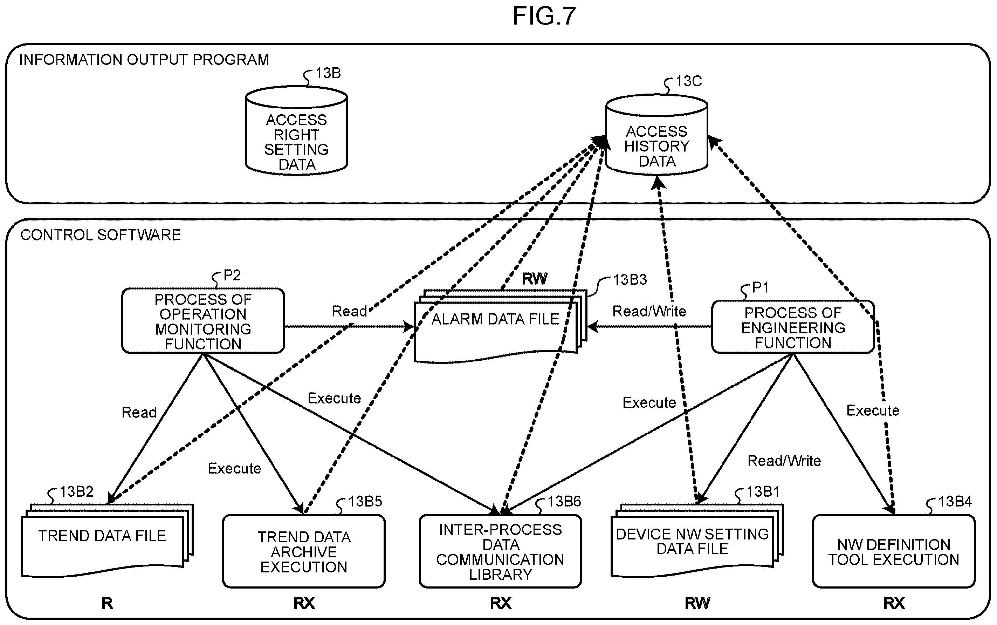

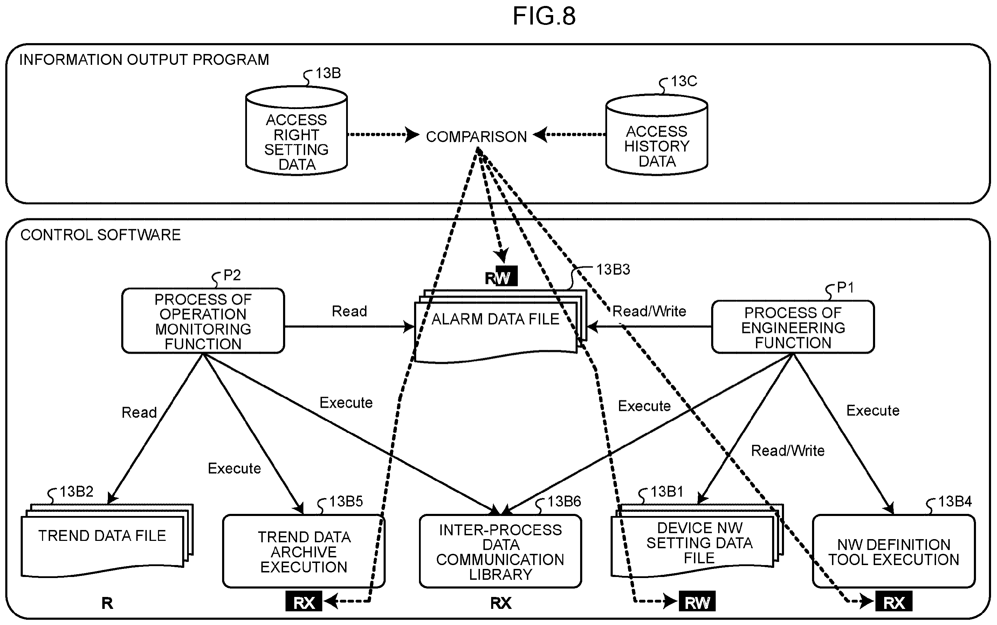

In the following, a case example in which the access right setting data 13B and the access history data 13C are compared will be described with reference to FIG. 4 to FIG. 8. FIG. 4 is a schematic diagram illustrating one example of an engineering result. FIG. 5 is a schematic diagram illustrating an acquisition example in which the access right is acquired. FIG. 6 is a schematic diagram illustrating one example of the access operation performed by the operator O1. FIG. 7 is a schematic diagram illustrating an acquisition example in which the access history is acquired. FIG. 8 is a schematic diagram illustrating a checking example in which the access right setting is checked against the access history.

FIG. 4 illustrates the resource that is in a state in which engineering of the control software has been performed, at Step S103 illustrated in FIG. 2, from among the resources included in the access target data 13A. More specifically, the device NW setting data file 13B1, the trend data file 13B2, the alarm data file 13B3, the NW definition tool execution 13B4, the trend data archive execution 13B5, and the inter-process data communication library 13B6 illustrated in FIG. 3 are selectively illustrated.

After that, at Step S104 illustrated in FIG. 2, as illustrated in FIG. 5, the setting of the access rights related to the device NW setting data file 13B1, the trend data file 13B2, the alarm data file 13B3, the NW definition tool execution 13B4, the trend data archive execution 13B5, and the inter-process data communication library 13B6 is acquired by the first acquisition unit 16.

Here, in FIG. 5, as one example, a scene in which the setting of the access right for the operator O1 is acquired by the first acquisition unit 16 is illustrated, and a symbol corresponding to the type of the access right is illustrated in association with each of the files denoted by a numerical reference 13B1 to a numerical reference 13B6 is illustrated. For example, in a case of an example of a data file, in a case where the access right of "read" has been set, a symbol "R" is associated with the subject data file, whereas, in a case where the access rights of "read" and "write" have been set, a symbol "RW" is associated with the subject data file. Moreover, in a case of an example of an execution file, in a case where the access right of "read" has been set, the symbol "R" is associated with the subject execution file, whereas, in a case where access rights of "read" and "execution" have been set, a symbol "RX" is associated with the subject execution file.

The setting of the access right for the operator O1 acquired in this way is stored as the access right setting data 13B in the storage unit 13 at Step S104 illustrated in FIG. 2 (see FIG. 3).

Then, at Step S106 illustrated in FIG. 2, as illustrated in FIG. 6, the access operation is performed by the operator O1. Here, in FIG. 6, from among the symbols associated with the respective files denoted by the numerical reference 13B1 to the numerical reference 13B6, the access type of the access operation that has been performed is indicated by black letters on a white background, whereas the access type of the access operation that has not been performed is indicated by black and white inverted display.

After that, at Step S107 illustrated in FIG. 2, as illustrated in FIG. 7, the access history of the operator O1 with respect to each of the files denoted by the numerical reference 13B1 to the numerical reference 13B6 is acquired by the second acquisition unit 18. In accordance with the example illustrated in FIG. 7, from among the symbols associated with the respective files denoted by the numerical reference 13B1 to the numerical reference 13B6, the access type of the access operation illustrated in FIG. 6 has been performed, that is, the access history associated with the symbol indicated by black letters on a white background is acquired by the second acquisition unit 18. When these items are individually listed, an access log including the resource of the "trend data file 13B2" and the access type of "read in", an access log including the resource of the "alarm data file 13B3" and the access type of "read in", an access log including the resource of the "inter-process data communication library 13B6" and the access type of "read in", and access log including the resource of the "inter-process data communication library 13B6" and the access type of "execution" are acquired.

And then, at Step S109 illustrated in FIG. 2, as illustrated in FIG. 8, the access right setting data 13B and the access history data 13C are compared by the output unit 19. In this case, from among the symbols associated with the respective files denoted by the numerical reference 13B1 to the numerical reference 13B6, the access type of the access operation to be performed by the operator O1 illustrated in FIG. 6 has not been performed, that is, the access right associated with the symbol indicated by black letters on a white background is extracted as a difference. When these items are individually listed, the access rights of "read" and "write" with respect to the resource of the "device NW setting data file 13B1", the access right of "write" with respect to the resource of the "alarm data file 13B3", the access rights of "read" and "execution" with respect to the resource of the "NW definition tool execution 13B4", and the access rights of "read" and "execution" with respect to the resource of the "trend data archive execution 13B5" are extracted as the differences.

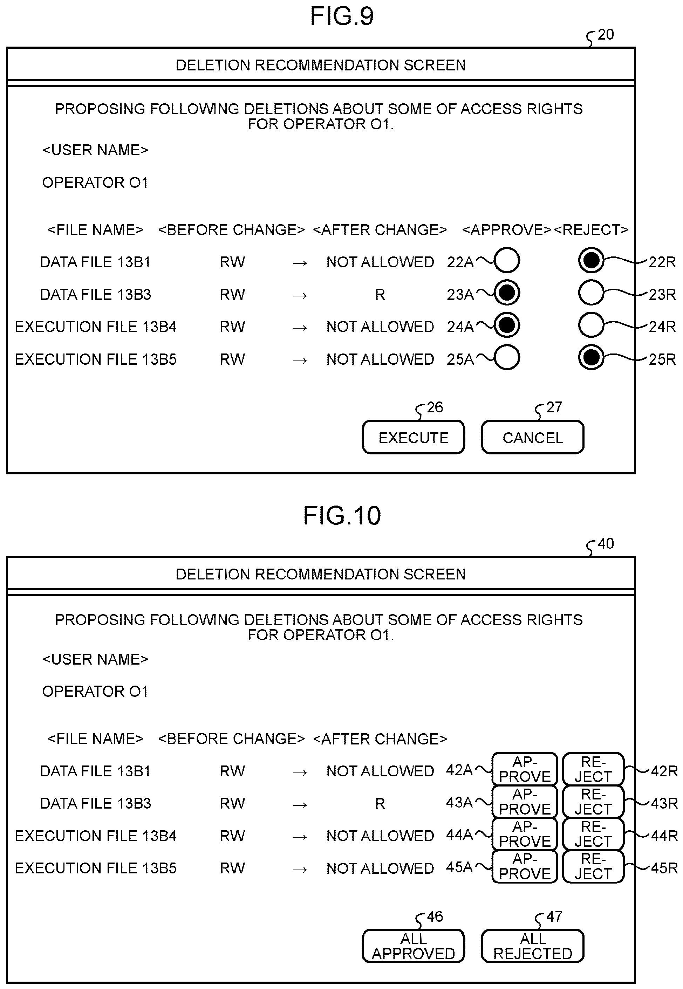

In a case where these differences have been extracted, at Step S110 illustrated in FIG. 2, a deletion recommendation screen 20 illustrated in FIG. 9, a deletion recommendation screen 40 illustrated in FIG. 10, or the like are displayed by the output unit 19.

FIG. 9 and FIG. 10 are diagrams each illustrating one example of the deletion recommendation screen. As illustrated in FIG. 9 and FIG. 10, on each of the deletion recommendation screen 20 and the deletion recommendation screen 40, respectively, a recommendation to delete the following four access rights described below is proposed. As a first recommendation, a recommendation to delete the access rights of "read" and "write" with respect to the resource of the "device NW setting data file 13B1" is proposed. As the second recommendation, a recommendation to delete the access right of "write" with respect to the resource of the "alarm data file 13B3" is proposed. As a third recommendation, a recommendation to delete the access rights of "read" and "execution" with respect to the resource of the "NW definition tool execution 13B4" is proposed. As a fourth recommendation, a recommendation to delete the access rights of "read" and "execution" with respect to the resource of the "trend data archive execution 13B5" is proposed.

By using the deletion recommendation screen 20 or the deletion recommendation screen 40 as described above, it is possible to exhibit the access right with respect to the resource for performing the function that is not actually used by the user as an excessive access right. As a result of this, for example, it is possible to prompt to delete the data file or the execution file for the engineer from the access right for the operator who uses only the operation monitoring function, and, in addition, it is possible to prompt to delete the execution file that is not used by the operator and that is included in the file related to the operation monitoring function.

Each of the deletion recommendation screen 20 and the deletion recommendation screen 40 is able to receive, for each deletion recommendation, approval or rejection of the corresponding deletion recommendation via arbitrary graphical user interface (GUI) parts.

For example, in a case where the deletion recommendation screen 20 illustrated in FIG. 9 is used as an example, by selecting one of radio button 22A and 22R that are arranged in an associated manner with the first deletion recommendation, it is possible to receive a selection made by the administrator indicating whether or not the first deletion recommendation is approved. In addition, in a similar manner, it is possible to receive a selection made by the administrator indicating whether or not the second to the fourth deletion recommendations via the selection operation of the radio button 23A or 23R, the selection operation of the radio button 24A or 24R, the selection operation of the radio button 25A or 25R, respectively, are approved. In a case where an operation of an execution button 26 is received in a state in which one of the two radio buttons that are arranged in each of the deletion recommendations is being selected, the output unit 19 deletes the access right associated with the selected and approved deletion recommendation. Furthermore, in a case where a cancel button 27 has been operated, even when the approved radio buttons 22A to 25A are being selected, the output unit 19 does not delete the access right corresponding to the deletion recommendation.

Moreover, in a case where the deletion recommendation screen 40 illustrated in FIG. 10 is used as an example, by selecting one of an approval button 42A and a rejection button 42R that are arranged in an associated manner with the first deletion recommendation, it is possible to receive a selection made by the administrator indicating whether or not the first deletion recommendation is approved. In addition, in a similar manner, it is possible to receive a selection made by the administrator indicating whether or not the second to the fourth deletion recommendations via the selection operation of the selection operation of an approval button 43A or a rejection button 43R, the selection operation of an approval button 44A or a rejection button 44R, and the selection operation of an approval button 45A or a rejection button 45R respectively. In a case where one of the pair of the approval button and the rejection button that are arranged in each of the four deletion recommendations has been selected, the output unit 19 deletes the access right corresponding to the deletion recommendation of the selected approval button. Moreover, in a case where an all approved button 46 has been selected, the output unit 19 deletes all of the access right corresponding to the four deletion recommendations. Furthermore, in a case where an all rejected button 47 has been operated, the output unit 19 does not perform the deletion of the access rights corresponding to the deletion recommendations.

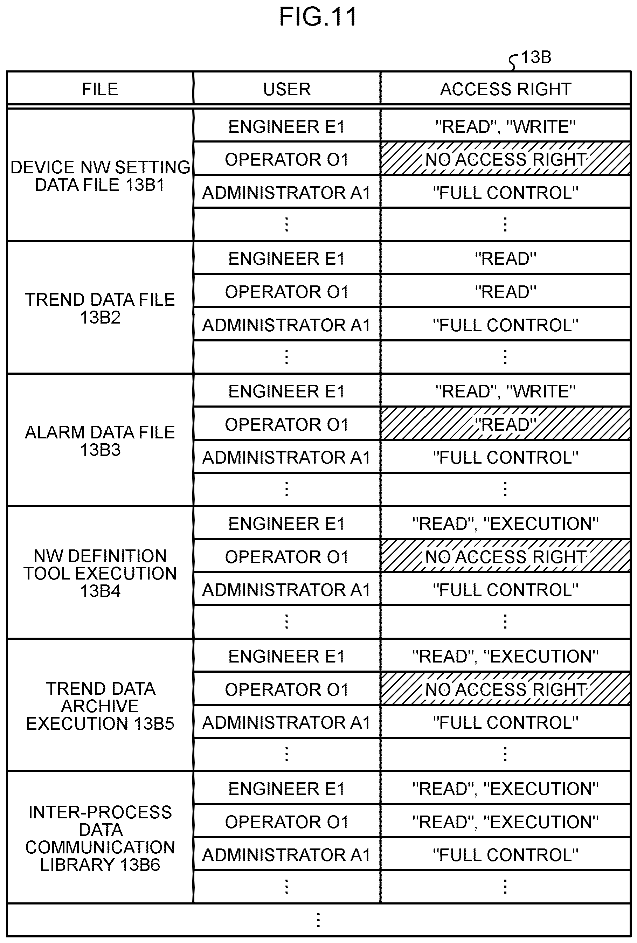

As one example, in a case where all of the four deletion recommendations have been approved, the access right setting data 13B illustrated in FIG. 3 is updated to the access right setting data 13B illustrated in FIG. 11 as a result of all of the access right corresponding to the four deletion recommendations being deleted.

FIG. 11 is a diagram illustrating one example of the access right setting data 13B. As illustrated in FIG. 11, in a case where all of the four deletion recommendations have been approved, the portions indicated by the hatching are updated in the column of the access right indicated in the access right setting data 13B. In other words, the access right with respect to the resource of the "device NW setting data file 13B1" is updated from "read" and "write" to "no access right". In addition, the access right with respect to the resource of the "alarm data file 13B3" is updated from "read" and "write" to "read". In addition, the access right with respect to the resource of the "NW definition tool execution 13B4" is updated from "read" and "execution" to "no access right". In addition, the access right of the resource of the "trend data archive execution 13B5" is updated from "read" and "execution" to "no access right".

### <One aspect of effects>

As described above, the information processing apparatus 10 according to the present embodiment acquires, for each resource in the process control system, setting data in which an access right to the resource has been set, acquires history data of the access performed on the resource, and outputs the resource corresponding to a difference between the setting data and the history data.

As a result of this, as one aspect, it is possible to allow the administrator or the like to know the access right to the resource in which the access right is not detected from among the access rights that are set in the setting data as an excessive access right, so that it is possible to prompt to delete the excessive access right.

Therefore, with the information processing apparatus 10 according to the present embodiment, it is possible to support minimization of the access right of the user. The information processing apparatus 10 is able to serve as one of a robust multi layered defense against cyberattacks by implementing the minimization of the access right.

### <Numerical value, etc.>

Specific examples of matters described in the embodiments as described above, for example, the number of user accounts, the number of types of rolls of the user, the number of data files, execution files, and libraries, and the type of the data file, the execution file, and the library, the configuration of the GUI parts included in the deletion recommendation screen, and the like are only examples, and are able to be changed. Moreover, the order of the processes of the flowchart described in the embodiment is also able to be changed as long as they do not conflict with each other.

### <System>

The flow of the processes, the control procedures, the specific names, and the information containing various kinds of data or parameters indicated in the above specification and drawings can be arbitrarily changed unless otherwise stated. For example, one or more of functioning units from among the first acquisition unit 16, the control function providing unit 17, the second acquisition unit 18, and the output unit 19 may also be separately configured in different devices. As one example, it may be possible to provide the above described information output function to the client server system that includes both of a server device that provides the function of the control function providing unit 17, that is, the function of the process control system, and a client terminal that is used by each of the users. At this time, the access target data 13A may be stored in a storage included in the server device, or may be stored in an external device, such as a file server. In this case, the functioning units corresponding to the above described information output function, that is, the first acquisition unit 16, the second acquisition unit 18, and the output unit 19, may be installed in the same server device as the server device on which the function of the control function providing unit 17 is mounted, or may be installed in a computer together with the server device on which the function of the control function providing unit 17 is mounted.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. Furthermore, each of the configurations may also be a physical configuration.

In addition, all or any part of each of the processing functions performed by each of the devices can be implemented by a Central Processing Unit (CPU) and by programs analyzed and executed by the CPU or implemented as hardware by wired logic.

### <Hardware>

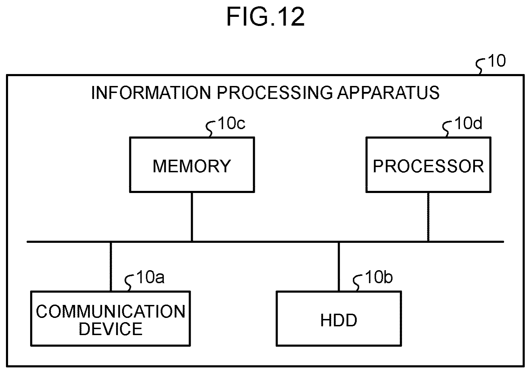

In the following, an example of a hardware configuration of the computer described above in the embodiment will be described. FIG. 12 is a diagram illustrating an example of the hardware configuration. As illustrated in FIG. 12, the information processing apparatus 10 includes a communication device 10a, a hard disk drive (HDD) 10b, a memory 10c, and a processor 10d. Furthermore, each of the units illustrated in FIG. 12 is connected by a bus or the like with each other.

The communication device 10a is a network interface card or the like, and performs communication with another server. The HDD 10b stores therein a database and a program that causes the functions illustrated in FIG. 1 to operate.

The processor 10d operates the process that executes each of the functions described above in FIG. 1 or the like by reading the program that executes the same processes as those performed by each of the processing units illustrated in FIG. 1 from the HDD 100b or the like and loading the read program in the memory 100c. For example, the process executes the same functions as those performed by each of the processing units included in the information processing apparatus 10. Specifically, the processor 10d reads, from the HDD 10b or the like, the program having the same functions as those performed by the first acquisition unit 16, the control function providing unit 17, the second acquisition unit 18, the output unit 19, and the like. Then, the processor 10d executes the same processes as those performed by the first acquisition unit 16, the control function providing unit 17, the second acquisition unit 18, the output unit 19, and the like.

In this way, the information processing apparatus 10 operates as an information processing apparatus that executes an information output method by reading and executing the program. Furthermore, the information processing apparatus 10 is also able to implement the same functions as those described above in the embodiment by reading the above described program from a recording medium by a medium reading device and executing the read program. In addition, the program described above need not always be executed by the information processing apparatus 10. For example, the present invention may also be similarly applied to a case in which another computer or another server executes the program or in a case in which another computer and another server cooperatively execute the program with each other.

The above described program may be distributed via a network, such as the Internet. Furthermore, the above described program may be executed by being recorded in an arbitrary recording medium, and being read from the recording medium by the computer. For example, the recording medium may be implemented by a hard disk, a flexible disk (FD), a CD-ROM, a magneto-optical disk (MO), a digital versatile disk (DVD), or the like.

### <Others>

Some examples of combinations of the disclosed technical features will be described below.

### Reference Signs List

(1)An information processing apparatus comprising:
   a first acquisition unit that acquires, for each resource in a predetermined system, setting data in which an access right to the resource has been set;
   a second acquisition unit that acquires history data of an access performed on the resource; and
   an output unit that outputs information on the resource corresponding to a difference between the setting data and the history data.
(2)The information processing apparatus according to (1), wherein the output unit outputs, as the information on the resource, a deletion recommendation that proposes to delete the access right to the resource in which the access is not detected in the history data from among the access rights that are set in the setting data.
(3)The information processing apparatus according to (2), wherein the output unit further performs a process of deleting, from the setting data, the access right to the resource corresponding to the deletion recommendation accepted for an approval operation from among the deletion recommendations.
(4)The information processing apparatus according to (1), wherein the resource is a resource that implements a function of a process control system that controls a process performed in a plant.
(5)The information processing apparatus according to any one of (1) to (4), wherein the resource is one of files among a data file, an execution file, and a library.
(6)An information output method that causes a computer to execute a process comprising:
   acquiring, for each resource in a predetermined system, setting data in which an access right to the resource has been set;
   acquiring history data of an access performed on the resource; and
   outputting information on the resource corresponding to a difference between the setting data and the history data.
(7)An information output program that causes a computer to execute a process comprising:
   acquiring, for each resource in a predetermined system, setting data in which an access right to the resource has been set;
   acquiring history data of an access performed on the resource; and
   outputting information on the resource corresponding to a difference between the setting data and the history data.

- 10: information processing apparatus
- 11: input unit
- 12: display unit
- 13: storage unit
- 13A: access target data
- 13B: access right setting data
- 13C: access history data
- 15: control unit
- 16: first acquisition unit
- 17: control function providing unit
- 17A: first function providing unit
- 17B: second function providing unit
- 18: second acquisition unit
- 19: output unit

## Claims

1. An information processing apparatus comprising:
a first acquisition unit that acquires, for each resource in a predetermined system, setting data in which an access right to the resource has been set;
a second acquisition unit that acquires history data of an access performed on the resource; and
an output unit that outputs information on the resource corresponding to a difference between the setting data and the history data.

2. The information processing apparatus according to claim 1, wherein the output unit outputs, as the information on the resource, a deletion recommendation that proposes to delete the access right to the resource in which the access is not detected in the history data from among the access rights that are set in the setting data.

3. The information processing apparatus according to claim 2, wherein the output unit further performs a process of deleting, from the setting data, the access right to the resource corresponding to the deletion recommendation accepted for an approval operation from among the deletion recommendations.

4. The information processing apparatus according to claim 1, wherein the resource is a resource that implements a function of a process control system that controls a process performed in a plant.

5. The information processing apparatus according to any one of claims 1 to 4, wherein the resource is one of files among a data file, an execution file, and a library.

6. An information output method that causes a computer to execute a process comprising:
acquiring, for each resource in a predetermined system, setting data in which an access right to the resource has been set;
acquiring history data of an access performed on the resource; and
outputting information on the resource corresponding to a difference between the setting data and the history data.

7. An information output program that causes a computer to execute a process comprising:
acquiring, for each resource in a predetermined system, setting data in which an access right to the resource has been set;
acquiring history data of an access performed on the resource; and
outputting information on the resource corresponding to a difference between the setting data and the history data.
